# EUROPEAN PATENT SPECIFICATION

(11) **EP 3 988 610 B1**
(45) Date of publication and mention of the grant of the patent: **28.01.2026**
(21) Application number: 20825530.7
(22) Date of filing: 10.06.2020
(51) Int. Cl.: C08L 15/00, B60C 1/00, C08C 19/25, C08L 23/28

(54) **POLYMER COMPOSITION, CROSSLINKED POLYMER, AND TIRE**
POLYMERZUSAMMENSETZUNG, VERNETZTES POLYMER UND REIFEN
COMPOSITION POLYMÈRE, POLYMÈRE RÉTICULÉ ET PNEUMATIQUE

(30) Priority: 18.06.2019 JP 2019113014
(43) Date of publication of application: 27.04.2022
(73) Proprietor: ENEOS Materials Corporation, Tokyo 105-7109 (JP)
(72) Inventor: KOBAYASHI, Natsumi, Tokyo 105-8640 (JP)
(74) Representative: TBK
(86) International application number: PCT/JP2020/022840
(87) International publication number: WO 2020/255823

(56) References cited:
- EP-A1- 2 407 507
- EP-A1- 2 868 696
- EP-A2- 3 330 273
- WO-A1-2014/132666
- WO-A1-2016/089035
- JP-A- 2010 006 185
- JP-A- 2011 126 929
- JP-A- 2012 051 970
- JP-A- 2018 021 145
- JP-A- 2018 095 842
- JP-A- 2018 145 240
- JP-A- 2019 026 685
- JP-A- 2019 501 256

## Description

### Technical Field

The present invention relates to a polymer composition, a crosslinked polymer, and a tire made by using the crosslinked polymer.

### Related Art

In recent years, there has been an increasing demand for low fuel consumption of automobiles in connection with the movement of global carbon dioxide emission regulations accompanying the growing interest in environmental issues. In order to meet this demand, reduction of rolling resistance is also required for tire performance. Conventionally, as a method of reducing the rolling resistance of a tire, a method of optimizing a tire structure has been studied, but currently, a polymer composition having a low tanδ (hereinafter, also referred to as "low loss property") and an excellent low heat generation property is generally used as the polymer composition applied to the tire to reduce the rolling resistance.

As a method of obtaining the polymer composition having a low heat generation property, it is conceivable to reduce the amount of a filler such as carbon black and silica, to use carbon black having a large particle diameter, or the like. However, in any of these methods, it is inevitable that a reinforcing property, wear resistance, and a grip property on a wet road surface (hereinafter, also referred to as "wet grip property") of the polymer composition are deteriorated.

Thus, for example, studies have been made on using a modified conjugated diene-based polymer as a tread material for a tire, the modified conjugated diene-based polymer being obtained in a manner that an active polymer having a metal terminal is formed and then modified by introducing a specific modifier into the active polymer (for example, see Patent literature 1). Patent literature 1 discloses that when this material is used as a tread material for a tire, it is excellent in the heat generation property, the wear resistance, and the wet grip property.

### [Literature of related art]

### [Patent literature]

Patent literature 1: JP-A-2016-528369
Patent Literature 2: WO 2014/132666 A1
Patent Literature 3: JP 2011 126929 A
WO 2014/132666 A1 relates to a rubber composition having excellent gas barrier properties, and more specifically, to a rubber composition comprising: a lamellar compound; and a modified conjugated diene-based polymer including a functional group that interacts with said lamellar compound.
JP 2011 126929 A provides a rubber composition for inner liners, which includes a rubber component comprising a butyl rubber and butadiene rubber modified with a compound represented by formula (1) (wherein, R1, R2 and R3 are each identically or differently a branched or non-branched alkyl, a branched or non-branched alkoxy, a branched or non-branched silyloxy, branched or non-branched acetal, carboxyl, mercapto or their derivatives; R4 and R5 are each identically or differently H or a branched or non-branched alkyl; n is an integer), silica, and a silane coupling agent represented by formula (2) and/or a silane coupling agent comprising bonding units A each having another specific side chain (C₇H₁₅-CO-S-C₃H₆-group) on Si and bonding units B each having a specific side chain (HS-C₃H₆-group) on Si.

### SUMMARY

### [Problems to be Solved]

However, when the modified conjugated diene-based polymer disclosed in Patent literature 1 is used as a tread material for a tire, there is a problem that the dispersibility of the filler contained in the polymer composition is not very satisfactory, and the sufficient performance in terms of processability cannot be obtained. On the other hand, in the obtained crosslinked polymer, the surface thereof tends to be ozone-deteriorated, thus there is also a problem in terms of ozone resistance.

Thus, some aspects of the present invention provide a polymer composition having satisfactory processability and suitable for manufacturing a tire having a highly excellent balance among a low loss property, a wet grip property, and ozone resistance. In addition, some aspects of the present invention provide a tire having a highly excellent balance among a low loss property, a wet grip property, and ozone resistance.

### [Means to Solve Problems]

The present invention has been made to solve at least a part of the problems described above, and can be realized in the form of the following aspects.

One aspect of a polymer composition according to the present invention contains:
(A) a conjugated diene-based polymer which is either a polymer of a conjugated diene compound or a copolymer of a conjugated diene compound and an aromatic vinyl compound, and which is a reaction product between an active polymerization terminal and a compound represented by any of the following general formulas (1) to (4); and
(B) a halogenated butyl elastomer, 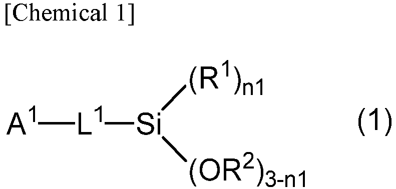 (In formula (1), A¹ is an amide group, a a monovalent group bonded to L¹ by a sulfide or a polysulfide, or represents a nitrile group, a pyridyl group, a (thio)formyl group, a (thio)carboxylic acid ester, a metal salt of a (thio)carboxylic acid ester, or a carboxylic acid halide; L¹ represents a hydrocarbylene group having 1 to 20 carbon atoms; R¹ and R² independently represent a hydrocarbyl group having 1 to 4 carbon atoms, respectively; and n1 is 0 or 1) 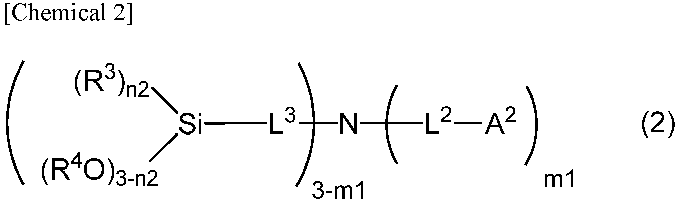 (In formula (2), A² is an imino group, an amide group, a (thio)carbonyl group, a (thio)carbonyloxy group, a monovalent group bonded to L² by a sulfide or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic acid halide, an imidazolyl group, or a group represented by the following formula (2a); L² and L³ independently represent a single bond or a hydrocarbylene group having 1 to 20 carbon atoms, respectively; R³ and R⁴ independently represents a hydrocarbyl group having 1 to 4 carbon atoms, respectively; n2 is 0 to 2; and m1 is 0 or 1) 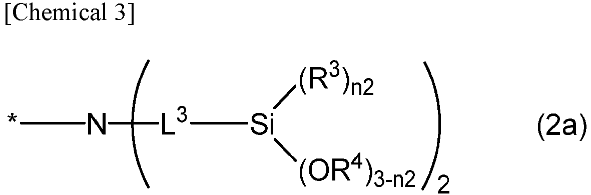 (In formula (2a), L³, R³, R⁴ and n2 are the same as in formula (2), and the sign "*" indicates a portion that bonds to L².) 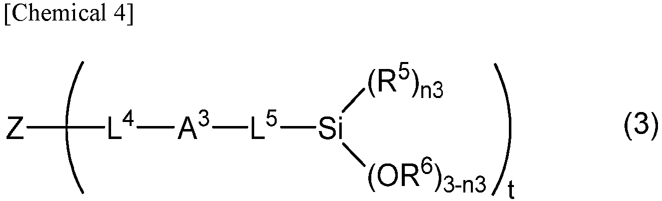 (In formula (3), A³ independently represents an imino group, an amide group, a (thio)carbonyl group, a (thio)carbonyloxy group, a secondary amino group, or a tertiary amino group, respectively; Z represents a t-valent group having 1 to 20 carbon atoms containing or not containing a nitrogen atom; L⁴ represents a single bond or a hydrocarbylene group having 1 to 20 carbon atoms; L⁵ represents a hydrocarbylene group having 1 to 20 carbon atoms; R⁵ and R⁶ independently represent a hydrocarbyl group having 1 to 4 carbon atoms, respectively; n3 is 0 or 1; and t is 2 or 3) 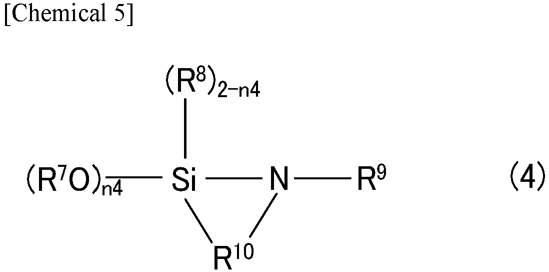 (In formula (4), R⁷ and R⁸ independently represent a hydrocarbyl group having 1 to 20 carbon atoms, respectively; R⁹ is a hydrocarbyl group having 1 to 20 carbon atoms, or a substituted alkyl group having 1 to 20 carbon atoms in which at least one of a hydrogen atom and -CH₂- contained in an alkyl group is substituted with a group containing at least one element selected from the group consisting of silicon, nitrogen, phosphorus, oxygen and sulfur, or represents an aromatic group having 6 to 20 carbon atoms containing at least one element selected from the group consisting of nitrogen, phosphorus, oxygen and sulfur; R¹⁰ represents an alkanediyl group having 1 to 20 carbon atoms; and n4 is 1 or 2).

In one aspect of the polymer composition,
the halogenated butyl elastomer (B) may be contained in an amount of 1 part by mass or more and 50 parts by mass or less with respect to 100 parts by mass of the polymer component contained in the polymer composition.

In any aspect of the polymer composition,
the weight average molecular weight of the conjugated diene-based polymer (A) in terms of polystyrene as measured by gel permeation chromatography may be 10,000 to 2,000,000.

In any aspect of the polymer composition, the halogenated butyl elastomer (B) may be at least one selected from the group consisting of a halogenated isobutylene-isoprene copolymer and a halogenated isobutylene-p-methylstyrene copolymer.

In any aspect of the polymer composition,
the Mooney viscosity ML_{1 + 8} of the halogenated butyl elastomer (B) at 125°C, which is measured in accordance with JIS K-6300-1: 2001, may be 20 to 60.

In any aspect of the polymer composition,
a crosslinking agent may be further contained.

One aspect of a crosslinked polymer according to the present invention is manufactured using the polymer composition of the above-described aspect.

One aspect of a tire according to the present invention uses the crosslinked polymer of the above-described aspect.

### [Effect]

According to the polymer composition of the present invention, a crosslinked polymer (tire) having satisfactory processability and a highly excellent balance among a low loss property, a wet grip property, and ozone resistance (tire) can be manufactured.

### DESCRIPTION OF THE EMBODIMENTS

Hereinafter, suitable embodiments according to the present invention are described in detail. It should be noted that the present invention is not limited to the embodiments described below, and also includes various modification examples implemented without changing the gist of the present invention.

In the present specification, the numerical range described as "A to B" is interpreted as including the numerical value A as a lower limit value and the numerical value B as an upper limit value.

In the present specification, "(meth)acrylic acid-" is a concept including both acrylic acid- and methacrylic acid-.

### 1. Polymer composition

A polymer composition according to the embodiment contains: (A) a conjugated diene-based polymer which is either a polymer of a conjugated diene compound or a copolymer of a conjugated diene compound and an aromatic vinyl compound, and which is a reaction product between an active polymerization terminal and a compound represented by any of the following general formulas (1) to (4); and (B) a halogenated butyl elastomer.

The polymer composition according to the embodiment is an unvulcanized polymer composition obtained by kneading a polymer component containing the conjugated diene-based polymer (A) and the halogenated butyl elastomer (B), and other additives as necessary. The polymer composition according to the embodiment forms a crosslinked polymer by being subjected to a crosslinking treatment such as vulcanization or the like.

Hereinafter, each component contained in the polymer composition according to the embodiment is described.

### 1.1. (A) Conjugated diene-based polymer

The polymer composition according to the embodiment contains a conjugated diene-based polymer (A) which is either a polymer of a conjugated diene compound or a copolymer of a conjugated diene compound and an aromatic vinyl compound, and which is a reaction product between an active polymerization terminal and a compound represented by any of the following general formulas (1) to (4) (in the present specification, also simply referred to as "conjugated diene-based polymer (A)"). 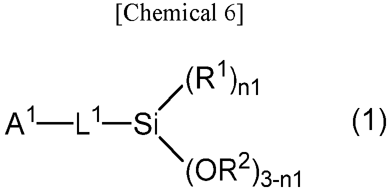 (In formula (1), A¹ is an amide group, a monovalent group bonded to L¹ by a sulfide or a polysulfide, or represents a nitrile group, a pyridyl group, a (thio)formyl group, a (thio)carboxylic acid ester, a metal salt of a (thio)carboxylic acid ester or a carboxylic acid halide; L¹ represents a hydrocarbylene group having 1 to 20 carbon atoms; R¹ and R² independently represent a hydrocarbyl group having 1 to 4 carbon atoms, respectively; and n1 is 0 or 1.) 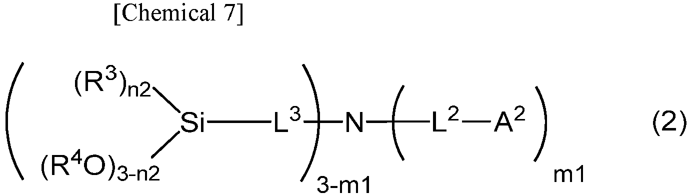 (In formula (2), A² is an imino group, an amide group, a (thio)carbonyl group, a (thio)carbonyloxy group, a monovalent group bonded to L² by a sulfide or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic acid halide, an imidazolyl group, or a group represented by the following formula (2a); L² and L³ independently represent a single bond or a hydrocarbylene group having 1 to 20 carbon atoms, respectively; R³ and R⁴ independently represents a hydrocarbyl group having 1 to 4 carbon atoms, respectively; n2 is 0 to 2; and m1 is 0 or 1.) 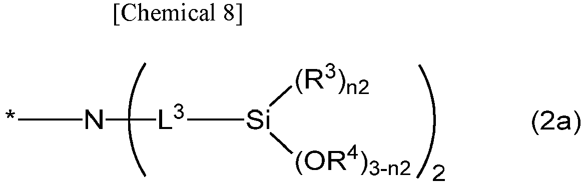 (In formula (2a), L³, R³, R⁴ and n2 are the same as in formula (2), and the sign "*" indicates a portion that bonds to L².) 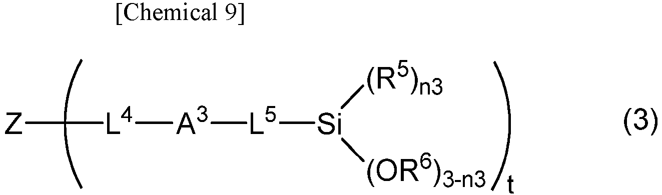 (In formula (3), A³ independently represents an imino group, an amide group, a (thio)carbonyl group, a (thio)carbonyloxy group, a secondary amino group, or a tertiary amino group, respectively; Z represents a t-valent group having 1 to 20 carbon atoms containing or not containing a nitrogen atom; L⁴ represents a single bond or a hydrocarbylene group having 1 to 20 carbon atoms; L⁵ represents a hydrocarbylene group having 1 to 20 carbon atoms; R⁵ and R⁶ independently represent a hydrocarbyl group having 1 to 4 carbon atoms, respectively; n3 is 0 or 1; and t is 2 or 3.) 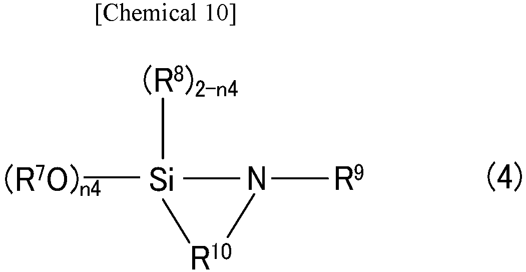 (In formula (4), R⁷ and R⁸ independently represent a hydrocarbyl group having 1 to 20 carbon atoms, respectively; R⁹ is a hydrocarbyl group having 1 to 20 carbon atoms, or a substituted alkyl group having 1 to 20 carbon atoms in which at least one of a hydrogen atom and -CH₂- contained in an alkyl group is substituted with a group containing at least one element selected from the group consisting of silicon, nitrogen, phosphorus, oxygen and sulfur, or represents an aromatic group having 6 to 20 carbon atoms containing at least one element selected from the group consisting of nitrogen, phosphorus, oxygen and sulfur; R¹⁰ represents an alkanediyl group having 1 to 20 carbon atoms; and n4 is 1 or 2.)

The conjugated diene-based polymer (A) has a structural unit derived from the conjugated diene compound, and has a structure derived from any of the compounds of the above general formulas (1) to (4) at the active polymerization terminal. The conjugated diene-based polymer (A) can be obtained in a manner that first, a monomer containing a conjugated diene compound is polymerized to obtain a polymer having an active terminal (polymerization process), and then the polymer having an active terminal is made to react with any of the compounds of the above general formulas (1) to (4) (hereinafter, also referred to as "specific modifier") (modification process).

### <Polymerization process>

The conjugated diene compound that can be used in polymerization may be, for example, 1,3-butadiene, isoprene, 2,3-dimethyl-1,3-butadiene, 1,3-pentadiene, 1,3-hexadiene, and 1,3-heptadiene, 2-phenyl-1,3-butadiene, 3-methyl-1,3-pentadiene, 2-chloro-1,3-butadiene, or the like. Among these compounds, 1,3-butadiene, isoprene, and 2,3-dimethyl-1,3-butadiene are preferable. The conjugated diene compound may be used alone or in combination of two or more.

The conjugated diene-based polymer (A) may be a homopolymer of the conjugated diene compound, but from the viewpoint of increasing the strength of the crosslinked polymer, a copolymer of the conjugated diene compound and an aromatic vinyl compound is preferable. In particular, a copolymer containing 1,3-butadiene and styrene in monomer composition is preferable in terms of a high living property in anionic polymerization. When the conjugated diene-based polymer (A) is a copolymer of the conjugated diene compound and an aromatic vinyl compound, the conjugated diene-based polymer (A) may typically have a random copolymerization portion in which the conjugated diene compound and the aromatic vinyl compound are irregularly distributed, and further have a block portion including structural units derived from the conjugated diene compound or the aromatic vinyl compound.

The aromatic vinyl compound that can be used during polymerization may be, for example, styrene, 2-methylstyrene, 3-methylstyrene, 4-methylstyrene, α-methyl styrene, 2,4-dimethylstyrene, 2,4-diisopropylstyrene, 5-tert-butyl-2-methylstyrene, vinyl ethylbenzene, divinylbenzene, trivinylbenzene, divinylnaphthalene, tert-butoxystyrene, vinylbenzyldimethylamine, (4-vinylbenzyl) dimethylaminoethyl ether, N,N-dimethylaminoethyl styrene, N,N-dimethylaminomethyl styrene, 2-ethylstyrene, 3-ethylstyrene, 4-ethylstyrene, 2-tert-butylstyrene, 3-tert-butylstyrene, 4-tert-butylstyrene, vinyl xylene, vinylnaphthalene, vinylpyridine, diphenylethylene, diphenylethylene containing a tertiary amino group (for example, 1-(4-N,N-dimethylaminophenyl)-1-phenylethylene, etc.), or the like. Among these compounds, styrene and α-methylstyrene are preferable. The aromatic vinyl compound may be used alone or in combination of two or more.

When the conjugated diene-based polymer (A) is a copolymer of the conjugated diene compound and the aromatic vinyl compound, from the viewpoint of improving the balance between a low loss property and a wet grip property of the obtained crosslinked polymer, the content of the aromatic vinyl compound (aromatic vinyl content) is preferably 3 to 55% by mass, and more preferably 5 to 50% by mass, with respect to 100% by mass of the total of the conjugated diene compound and the aromatic vinyl compound used for the polymerization. Note that, the aromatic vinyl content of the conjugated diene-based polymer (A) can be measured by ¹H-NMR.

In the polymerization, an additional monomer other than the conjugated diene compound and the aromatic vinyl compound may be used. The additional monomer may be, for example, acrylonitrile, methyl (meth)acrylate, ethyl (meth)acrylate, hydroxyethyl (meth)acrylate, or the like. The amount of the additional monomer used is preferably 25% by mass or less, more preferably 15% by mass or less, and particularly preferably 10% by mass or less, with respect to 100% by mass of the total amount of the monomers used for the polymerization.

As the polymerization method to be used, any of a solution polymerization method, a gas phase polymerization method, and a bulk polymerization method may be used, and the solution polymerization method is particularly preferable. In addition, as the polymerization type, either a batch type or a continuous type may be used. When the solution polymerization method is used, as an example of a specific polymerization method, a monomer containing the conjugated diene compound may be polymerized in an organic solvent in the presence of a polymerization initiator, and a randomizer used as necessary.

As the polymerization initiator, an alkali metal compound or an alkaline earth metal compound can be used. A specific example of these compounds may be, for example, alkyl lithium such as methyl lithium, ethyl lithium, n-propyl lithium, n-butyl lithium, sec-butyl lithium and tert-butyl lithium, 1,4-dilithiobutane, phenyl lithium, stilbene lithium, naphthyl lithium, 1,3-bis(1-lithio-1,3-dimethylpentyl) benzene, 1,3-phenylene bis(3-methyl-1-phenylpentylidene) dilithium, 3-(dimethylamino) propyllithium, naphthyl sodium, naphthyl potassium, di-n-butyl magnesium, di-n-hexyl magnesium, ethoxy potassium, calcium stearate, or the like. Among these compounds, a lithium compound is preferable. The total amount of the polymerization initiator used is preferably 0.2 to 20 mmol with respect to 100 g of the monomer used for the polymerization. Note that, the polymerization initiator may be used alone or in combination of two or more.

In addition, the polymerization reaction may be carried out in the presence of a compound (hereinafter, also referred to as "modification initiator") obtained by mixing the alkali metal compound or the alkaline earth metal compound with a compound having a functional group that interacts with silica. By carrying out the polymerization in the presence of the modification initiator, the functional group that interacts with silica can be introduced into a polymerization initiation terminal of the conjugated diene-based polymer (A). Note that, in the present specification, the "interaction" means the formation of a covalent bond between molecules or the formation of an intermolecular force (for example, an electromagnetic force acting between molecules, such as an ion-dipole interaction, a dipole-dipole interaction, a hydrogen bond, a Van Der Waals force, or the like) weaker than the covalent bond. The "functional group that interacts with silica" preferably has at least one atom selected from the group consisting of a nitrogen atom, a sulfur atom, a phosphorus atom, and an oxygen atom.

The modification initiator is preferably a reaction product of a lithium compound such as alkyl lithium and a nitrogen-containing compound such as a secondary amine compound. A specific example of the nitrogen-containing compound may be, for example, dimethylamine, diethylamine, dipropylamine, dibutylamine, dodecamethyleneimine, N,N'-dimethyl-N'-trimethylsilyl-1,6-diaminohexane, piperidine, pyrrolidine, hexamethylene imine, heptamethylene imine, dicyclohexylamine, N-methylbenzylamine, di-(2-ethylhexyl) amine, diallylamine, morpholine, N-(trimethylsilyl) piperazine, N-(tert-butyldimethylsilyl) piperazine, 1,3-ditrimethylsilyl-1,3,5-triazinane, or the like. Moreover, when the polymerization is carried out in the presence of the modification initiator, the alkali metal compound or the alkaline earth metal compound may be mixed with the compound having a functional group that interacts with silica in advance to prepare a modification initiator, and then the prepared modification initiator may be added to a polymerization system to carry out the polymerization. Alternatively, the alkali metal compound or the alkaline earth metal compound and the compound having a functional group that interacts with silica may be added to the polymerization system, and then both compounds are mixed in the polymerization system to prepare a modification initiator, thereby carrying out the polymerization. Alternatively, an alkyl lithium compound containing nitrogen can also be used. As a specific example of the alkyl lithium compound containing nitrogen, a reaction product of 3-dimethylaminopropyllithium and isoprene can be used.

The randomizer can be used for the purpose of adjusting the vinyl bond content, which represents the content by percentage of the vinyl bond (1,2-bond and 3,4-bond) in the polymer, or other purposes. An example of the randomizer may be dimethoxybenzene, tetrahydrofuran, dimethoxyethane, diethylene glycol dibutyl ether, diethylene glycol dimethyl ether, 2,2-di (tetrahydrofuryl) propane, 2-(2-ethoxyethoxy)-2-methylpropane, triethylamine, pyridine, N-methyl morpholine, tetramethylethylenediamine, or the like. These randomizers can be used alone or in combination of two or more.

The organic solvent used for the polymerization may be any organic solvent that is inert to the reaction, and for example, aliphatic hydrocarbon, alicyclic hydrocarbon, aromatic hydrocarbon, and the like can be used. In particular, the hydrocarbon having 3 to 8 carbon atoms is preferable, and a specific example thereof may be, for example, propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethyl benzene, heptane, cyclopentane, methylcyclopentane, methylcyclohexane, 1-pentene, 2-pentene, cyclohexene, or the like. Note that, the organic solvent may be used alone or in combination of two or more.

When solution polymerization is used, from the viewpoint of maintaining a balance between productivity and ease of polymerization control, the monomer concentration in the reaction solvent is preferably 5 to 50% by mass, and more preferably 10 to 30% by mass. The temperature of the polymerization reaction is preferably -20°C to 150°C, more preferably 0°C to 120°C, and particularly preferably 20°C to 100°C. In addition, the polymerization reaction is preferably carried out under a pressure sufficient to keep the monomer in a substantially liquid phase. The pressure can be obtained by a method such as pressurizing the inside of a reactor with a gas that is inert to the polymerization reaction. By the polymerization reaction, a conjugated diene-based polymer having an active terminal can be obtained.

For the conjugated diene-based polymer having an active terminal, the vinyl bond content in the structural unit derived from the conjugated diene compound is preferably 30 to 65 mol%, more preferably 33 to 62 mol%, and particularly preferably 35 to 60 mol%. If the vinyl bond content is less than 30 mol%, the grip characteristic tends to be too low, and if the vinyl bond content exceeds 65 mol%, the wear resistance of the obtained crosslinked polymer tends to deteriorate. Note that, in the present specification, the "vinyl bond content" is a value indicating the content ratio of the structural unit having a vinyl bond with respect to all the structural units derived from the conjugated diene compound in the conjugated diene-based polymer, and is a value measured by ¹H-NMR.

### <Modification process>

Next, the active terminal of the conjugated diene-based polymer obtained by the above polymerization reaction is made to react with the compounds represented by the following general formulas (1) to (4) (specific modifiers). Through these processes, the conjugated diene-based polymer (A) terminally modified with a specific modifier can be obtained. Because the conjugated diene-based polymer (A) terminally modified with a specific modifier has a stronger interaction with a filler at the terminal modification site, the mechanical strength and the tensile strength are improved. In addition, because the rigidity at low strain is increased, the steering stability is also improved. 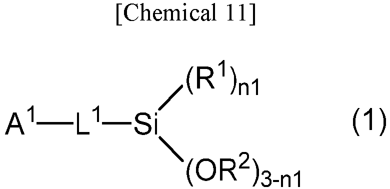 (In formula (1), A¹ is an amide group, a monovalent group bonded to L¹ by a sulfide or a polysulfide, or represents a nitrile group, a pyridyl group, a (thio)formyl group, a (thio)carboxylic acid ester, a metal salt of a (thio)carboxylic acid ester, or a carboxylic acid halide; L¹ represents a hydrocarbylene group having 1 to 20 carbon atoms; R¹ and R² independently represent a hydrocarbyl group having 1 to 4 carbon atoms, respectively; and n1 is 0 or 1.)

In the above formula (1), the hydrocarbylene group having 1 to 20 carbon atoms represented by L¹ may be a linear or branched alkanediyl group having 1 to 20 carbon atoms, a cycloalkylene group having 3 to 20 carbon atoms, an arylene group having 6 to 20 carbon atoms, or the like. In the above formula (1), the hydrocarbyl group having 1 to 4 carbon atoms represented by R¹ and R² may be a linear or branched alkyl group having 1 to 4 carbon atoms, or a cycloalkyl group having 3 to 4 carbon atoms. Note that, in the present specification, the (thio)carbonyl group represents a carbonyl group and a thiocarbonyl group, the (thio)carbonyloxy group represents a carbonyloxy group and a thiocarbonyloxy group, the (thio)epoxy group represents an epoxy group and a thioepoxy group, the (thio)isocyanate group represents an isocyanate group and a thioisocyanate group, the (thio)formyl group represents a formyl group and a thioformyl group, and the (thio)carboxylic acid ester represents a carboxylic acid ester and a thiocarboxylic acid ester.

A specific example of the compound represented by the above general formula (1) may be N,N-dimethylaminopropyltriethoxysilane, N-benzylidene-3-triethoxysilyl-1-propaneamine, or the like. 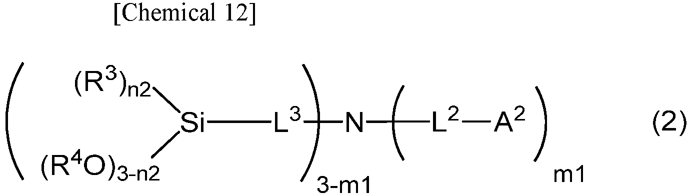 (In formula (2), A² is an imino group, an amide group, a (thio)carbonyl group, a (thio)carbonyloxy group, a monovalent group bonded to L² by a sulfide or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic acid halide, an imidazolyl group, or a group represented by the following formula (2a); L² and L³ independently represent a single bond or a hydrocarbylene group having 1 to 20 carbon atoms, respectively; R³ and R⁴ independently represents a hydrocarbyl group having 1 to 4 carbon atoms, respectively; n2 is 0 to 2; and m1 is 0 or 1.) 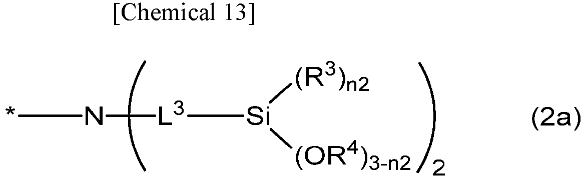 (In formula (2a), L³, R³, R⁴ and n2 are the same as in formula (2), and the sign "*" indicates a portion that bonds to L².)

In the above formula (2), the hydrocarbylene group having 1 to 20 carbon atoms represented by L² and L³ may be a linear or branched alkanediyl group having 1 to 20 carbon atoms, a cycloalkylene group having 3 to 20 carbon atoms, an arylene group having 6 to 20 carbon atoms, or the like. In the above formula (2), the hydrocarbyl group having 1 to 4 carbon atoms represented by R³ and R⁴ may be a linear or branched alkyl group having 1 to 4 carbon atoms, or a cycloalkyl group having 3 to 4 carbon atoms.

A specific example of the compound represented by the above general formula (2) may be N,N-bis(triethoxysilylpropyl) aminopropyl-1-imidazole, N,N,N-tris(triethoxysilylpropyl) amine, or the like. 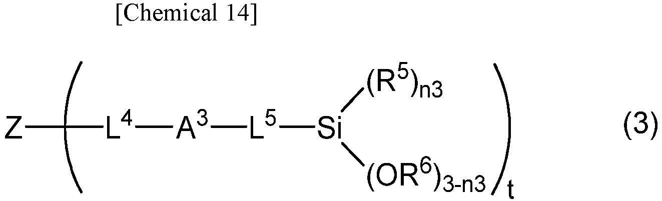 (In formula (3), A³ independently represents an imino group, an amide group, a (thio)carbonyl group, a (thio)carbonyloxy group, a secondary amino group, or a tertiary amino group, respectively; Z represents a t-valent group having 1 to 20 carbon atoms containing or not containing a nitrogen atom; L⁴ represents a single bond or a hydrocarbylene group having 1 to 20 carbon atoms; L⁵ represents a hydrocarbylene group having 1 to 20 carbon atoms; R⁵ and R⁶ independently represent a hydrocarbyl group having 1 to 4 carbon atoms, respectively; n3 is 0 or 1; and t is 2 or 3.)

In the above formula (3), Z is a divalent or trivalent group having 1 to 20 carbon atoms which may contain a nitrogen atom, and preferably contains a nitrogen atom. In the above formula (3), the hydrocarbylene group having 1 to 20 carbon atoms represented by L⁴ and the hydrocarbylene group having 1 to 20 carbon atoms represented by L⁵ may be a linear or branched alkanediyl group having 1 to 20 carbon atoms, a cycloalkylene group having 3 to 20 carbon atoms, an arylene group having 6 to 20 carbon atoms, or the like. In the above formula (3), the hydrocarbyl group having 1 to 4 carbon atoms represented by R⁵ and R⁶ may be a linear or branched alkyl group having 1 to 4 carbon atoms, or a cycloalkyl group having 3 to 4 carbon atoms.

A specific example of the compound represented by the above general formula (3) may be a compound represented by the following formulas (M-1) to (M-4), or other compounds. 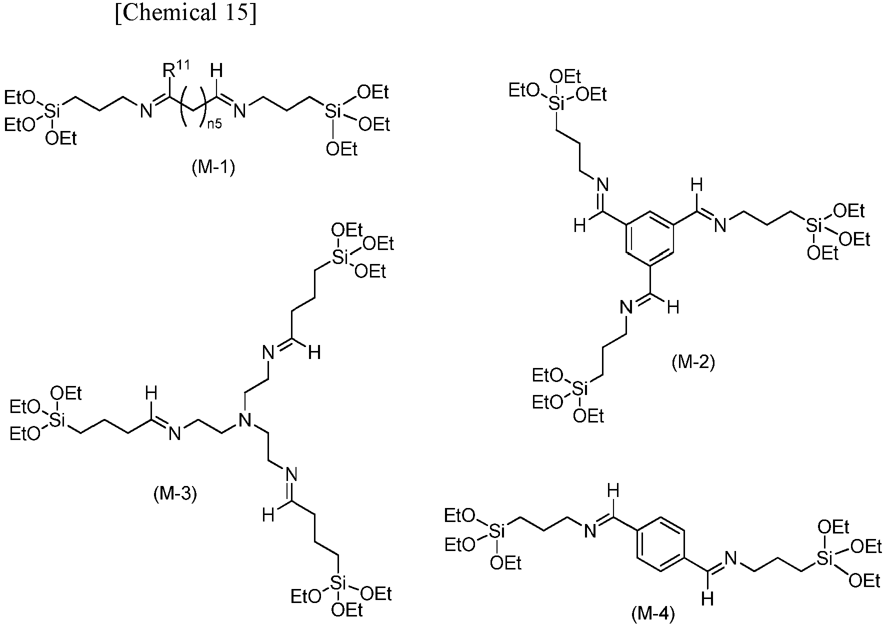 In the above formula (M-1), R¹¹ represents a hydrogen atom or an alkyl group having 1 to 20 carbon atoms, and n5 represents an integer of 1 to 10. 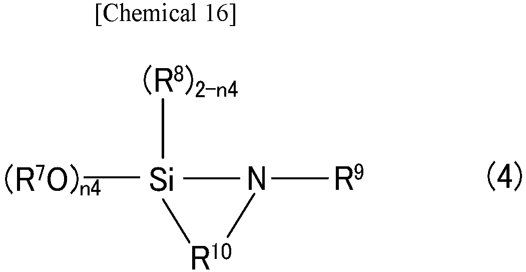 (In formula (4), R⁷ and R⁸ independently represent a hydrocarbyl group having 1 to 20 carbon atoms, respectively; R⁹ is a hydrocarbyl group having 1 to 20 carbon atoms, or a substituted alkyl group having 1 to 20 carbon atoms in which at least one of a hydrogen atom and -CH₂- contained in an alkyl group is substituted with a group containing at least one element selected from the group consisting of silicon, nitrogen, phosphorus, oxygen and sulfur, or represents an aromatic group having 6 to 20 carbon atoms containing at least one element selected from the group consisting of nitrogen, phosphorus, oxygen and sulfur; R¹⁰ represents an alkanediyl group having 1 to 20 carbon atoms; and n4 is 1 or 2.)

In the above formula (4), the hydrocarbyl group having 1 to 20 carbon atoms represented by R⁷ and R⁸ may be a linear or branched alkyl group having 1 to 20 carbon atoms, a cycloalkyl group having 3 to 20 carbon atoms, an aryl group having 6 to 20 carbon atoms, or the like.

A specific example of the compound represented by the above general formula (4) may be N-phenyl-2,2-dimethoxy-1-aza-2-silacyclopentane, N-(3-triethoxysilylpropyl)-2,2-dimethoxy-1-aza-2-silacyclopentane, or the like.

Moreover, in the modification reaction of the conjugated diene-based polymer having an active terminal, the specific modifier may be used alone, or a modifier other than the specific modifier (hereinafter, also referred to as "the additional modifier") may be used together with the specific modifier. The additional modifier is not particularly limited as long as it is a compound having a functional group that interacts with the filler and can react with the active terminal of the polymer.

The above modification reaction can be carried out as, for example, a solution reaction. The solution reaction may be carried out using a solution containing the unreacted monomer after the completion of the polymerization reaction, or may be carried out after the conjugated diene-based polymer contained in this solution is isolated and then dissolved in an appropriate solvent such as cyclohexane or the like. In addition, the modification reaction may be carried out using either a batch type or a continuous type. At this time, the method of adding the modifier is not particularly limited, and includes a method of adding the modifier all at once, a method of adding the modifier in divided portions, a method of continuously adding the modifier, and the like.

The usage ratio of the specific modifier (the total amount thereof when two or more kinds are used) is preferably 0.2 mol or more, and more preferably 0.4 mol or more, with respect to 1 mol of the metal atom contained in the polymerization initiator and involved in the polymerization reaction. By setting the usage ratio to 0.2 mol or more, the modification reaction of the polymer terminal caused by the specific modifier can be sufficiently promoted, and the interaction with the filler at the terminal modification site can be sufficiently strengthened. In addition, in terms of reducing the amount of unreacted products in the solution after the modification reaction, the upper limit of the usage ratio of the specific modifier is preferably less than 1.5 mol, and more preferably less than 1.2 mol, with respect to 1 mol of the metal atom contained in the polymerization initiator and involved in the polymerization reaction.

Moreover, when the specific modifier is used in combination with the additional modifier during the modification reaction, from the viewpoint of sufficiently promoting the reaction between the conjugated diene-based polymer and the specific modifier, the usage ratio of the additional modifier is preferably 30 mol% or less, more preferably 20 mol% or less, and particularly preferably 10 mol% or less, with respect to the total usage ratio of the modifier and the additional modifier.

The temperature of the modification reaction is generally the same as the temperature of the polymerization reaction, and is preferably -20°C to 150°C, more preferably 0°C to 120°C, and particularly preferably 20°C to 100°C. If the temperature of the modification reaction is low, the viscosity of the conjugated diene-based polymer after modification tends to increase. On the other hand, if the temperature of the modification reaction is high, the active terminal of the polymer is likely to be deactivated. The reaction time of the modification reaction is preferably 1 minute to 5 hours, and more preferably 2 minutes to 1 hour.

The conjugated diene-based polymer (A) contained in the reaction solution can be isolated by, for example, a known desolvation method such as steam stripping or the like, and a drying operation such as heat treatment or the like. The Mooney viscosity of the obtained conjugated diene-based polymer (A) may be adjusted by adding an extender oil or the like, if necessary. By this treatment, the processability can be improved. The extender oil may be, for example, aroma oil, naphthene oil, paraffin oil, or the like. The blending amount of the extender oil may be appropriately set according to the monomer used for the polymerization and the like, and is, for example, 10 to 50 parts by mass with respect to 100 parts by mass of the conjugated diene-based polymer.

In this way, the conjugated diene-based polymer (A) can be obtained. According to the conjugated diene-based polymer (A), the dispersibility of the filler can be improved. Thereby, a crosslinked polymer capable of simultaneously improving the low loss property, the wear resistance, and the ozone resistance required for applications such as automobile tires and the like can be obtained. In addition, according to the conjugated diene-based polymer (A), a polymer composition having satisfactory processability can be obtained.

The conjugated diene-based polymer (A) preferably has a structure derived from any of the compounds of the above general formulas (1) to (4) on at least one terminal of the polymer. The conjugated diene-based polymer (A) having this structure is preferable in terms of further improving the dispersibility of the filler such as silica or the like, and achieving a higher improvement effect in the low loss property and the wear resistance when applied to, for example, tire applications.

The weight average molecular weight (Mw) of the conjugated diene-based polymer (A) in terms of polystyrene as measured by gel permeation chromatography (GPC) is preferably 10,000 to 2,000,000. If Mw is smaller than 10,000, the low loss property and the wear resistance of the crosslinked polymer of the polymer composition according to the embodiment tends to decrease, and if Mw is larger than 2,000,000, the processability of the polymer composition tends to decrease. The weight average molecular weight (Mw) of the obtained conjugated diene-based polymer (A) is more preferably 30,000 to 1,500,000, and further preferably 50,000 to 1,000,000.

The molecular weight distribution of the conjugated diene-based polymer (A), that is, the ratio (Mw/Mn) of the weight average molecular weight (Mw) to the number average molecular weight (Mn) is preferably 1.5 to 3.0, more preferably 1.5 to 2.5, and particularly preferably 1.5 to 2.2. If the molecular weight distribution of the conjugated diene-based polymer (A) is within the above range, more excellent low loss property, wear resistance, wet grip performance, and mechanical characteristic can be easily obtained.

### 1.2. (B) Halogenated butyl elastomer

The polymer composition according to the embodiment contains a halogenated butyl elastomer (B) (hereinafter, also referred to as "component (B)"). In the component (B), rubber molecules act like a dispersant due to the presence of halogen, and thereby the dispersibility of the filler described later is improved and the processability becomes satisfactory. In addition, by improving the dispersibility of the filler, the low loss property and the wet grip property of the obtained crosslinked polymer (tire) are also improved.

The component (B) is an elastomer obtained by halogenating (preferably chlorinating or brominating) a copolymer of isobutylene and a conjugated diene compound or an aromatic vinyl compound. The conjugated diene compound constituting the main skeleton of the component (B) is preferably a conjugated diene compound having 4 to 6 carbon atoms, and particularly preferably isoprene. In addition, the aromatic vinyl compound constituting the main skeleton of the component (B) is preferably an aromatic vinyl compound in which an aromatic ring is substituted with an alkyl group having 1 to 4 carbon atoms, and particularly preferably p-methylstyrene.

The component (B) is preferably at least one of a halogenated isobutylene-isoprene copolymer and a halogenated isobutylene-p-methylstyrene copolymer, more preferably a halogenated isobutylene-isoprene copolymer, and particularly preferably at least one of a chlorinated isobutylene-isoprene copolymer and brominated isobutylene-isoprene copolymer. Moreover, a graft copolymer of the chlorinated isobutylene-isoprene copolymer and/or the brominated isobutylene-isoprene copolymer and the conjugated diene-based polymer may be contained in the polymer composition.

In the component (B), the content ratio of structural units derived from isobutylene is preferably 90.0 to 99.9% by mass, and the content ratio of structural units derived from the conjugated diene compound or the aromatic vinyl compound is preferably 0.1 to 10.0% by mass. In addition, the halogen content of the component (B) is preferably 0.1 to 10% by mass, and more preferably 0.2 to 5% by mass.

The Mooney viscosity ML_{1 + 8} of the component (B) at 125°C is preferably 20 to 60, and more preferably 30 to 60. Note that, the Mooney viscosity ML_{1 + 8} is a value measured in accordance with JIS K-6300-1: 2001 with a preheating time of an L-shaped rotor set to 1 minute and a rotation time of the rotor set to 8 minutes at a temperature of 125°C.

A specific example of the component (B) may be: a commercially available product of chlorinated isobutylene-isoprene copolymer (CI-IIR) such as "JSR CHLOROBUTYL1066" manufactured by JSR Corporation; a commercially available product of brominated isobutylene-isoprene copolymer (Br-IIR) such as "JSR BROMOBUTYL2222", "JSR BROMOBUTYL2244", "JSR BROMOBUTYL2255" and "JSR BROMOBUTYL2266" manufactured by JSR Corporation; a brominated isobutylene-p-methylstyrene copolymer (BIMS) such as "EXXPRO90-10" manufactured by Exxon Mobil Corporation. Note that, as the component (B), these copolymers can be used alone or in combination of two or more.

The lower limit of the content ratio of the component (B) is preferably 1 part by mass, more preferably 3 parts by mass, and particularly preferably 7 parts by mass with respect to 100 parts by mass of the polymer component contained in the polymer composition. If the content ratio of the component (B) is equal to or greater than the above lower limit value, the effect of improving the processability of the polymer composition by adding the component (B) can be sufficiently enhanced, which is preferable. On the other hand, the upper limit of the content ratio of the component (B) is preferably 50 parts by mass, more preferably 40 parts by mass, and particularly preferably 30 parts by mass with respect to 100 parts by mass of the polymer component contained in the polymer composition. If the content ratio of the component (B) is equal to or lower than the above upper limit value, the wear resistance, the low loss property, and the wet grip property of the crosslinked polymer are easily maintained satisfactory. Note that, in addition to the conjugated diene-based polymer (A) and the halogenated butyl elastomer (B), the "polymer component" includes an additional diene-based polymer described later, which is added as necessary, other than the conjugated diene-based polymer (A).

### 1.3. Additional component

In the polymer composition according to the embodiment, in addition to the components described above, if necessary, an additional diene-based polymer other than the conjugated diene-based polymer (A), a filler, a silane coupling agent, a crosslinking agent, an acidic compound, an extender oil (process oil), an anti-aging agent, a vulcanization accelerator, and additionally, if necessary, a known additive such as a vulcanization aid, a processing aid, an anti-scorch agent, zinc oxide, a softener, a colorant, a flame retardant, a lubricant, a foaming agent, a plasticizer, an antioxidant, a UV inhibitor, an antistatic agent, a color inhibitor, and the like can be used depending on the purpose of use of the polymer composition.

### <Additional polymer>

The polymer composition according to the embodiment may contain an additional diene-based polymer other than the conjugated diene-based polymer (A). The additional diene-based polymer is not particularly limited as long as it has a repeating unit derived from a conjugated diene compound, and may be, for example, natural rubber, polybutadiene, polyisoprene, ethylene-propylene-diene rubber, styrene-butadiene rubber, acrylonitrile-butadiene rubber, or the like.

When the polymer composition according to the embodiment contains an additional polymer, the content ratio of the additional polymer is preferably 50 parts by mass or less, more preferably 40 parts by mass or less, and particularly preferably 35 parts by mass or less when the total amount of the polymer components contained in the polymer composition is 100 parts by mass.

### <Filler>

The polymer composition according to the embodiment may contain a filler in order to further improve the low loss property, the wear resistance, and the wet grip property of the obtained crosslinked polymer. The filler may be, for example, silica, carbon black, and a mixture thereof.

### (Silica)

The silica may be wet silica (hydrous silicic acid), dry silica (anhydrous silicic acid), calcium silicate, aluminum silicate, or the like. Among these examples, wet silica is preferable. The usage ratio of silica is preferably 30 to 130 parts by mass, more preferably 40 to 120 parts by mass, and particularly preferably 50 to 110 parts by mass with respect to 100 parts by mass of the polymer component. If the usage ratio of silica is equal to or greater than the above lower limit value, sufficient wear resistance and wet grip performance can be easily obtained, and if the usage ratio of silica is equal to or lower than the above upper limit value, sufficient low loss property can be easily obtained.

Furthermore, the usage ratio of silica is preferably 20% by mass or more, and more preferably 50% by mass or more with respect to 100% by mass of the filler component. If the usage ratio of silica is within this range, it is advantageous in terms of the low loss property, the wear resistance, and the wet grip performance.

### (Carbon black)

The carbon black is not particularly limited, and carbon black generally blended in the polymer composition can be used. A specific example thereof may be, for example, GPF, FEF, HAF, ISAF, SAF, or the like. Among these examples, ISAF, SAF, and HAF are preferable, and ISAF is more preferable.

The usage ratio of carbon black is preferably 0 to 130 parts by mass, and more preferably 2 to 110 parts by mass with respect to 100 parts by mass of the polymer component.

### (Silane coupling agent)

The silane coupling agent may be, for example, bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, 3-octanoylthio-1-propyltriethoxysilane, or the like. These compounds can be used alone or in combination of two or more. In addition, among these compounds, bis(3-triethoxysilylpropyl) trisulfide, bis(3-triethoxysilylpropyl) disulfide, and 3-trimethoxysilylpropylbenzothiazolyltetrasulfide are preferable from the viewpoint of improving the reinforcing property, or the like.

The usage ratio of the silane coupling agent is preferably 0.5 to 20 parts by mass with respect to 100 parts by mass of the filler component. If the usage ratio of the silane coupling agent is within the above range, sufficient reinforcing property and fracture resistance can be imparted to the crosslinked polymer formed from the polymer composition, and the wear resistance of the crosslinked polymer can be improved.

### <Crosslinking agent>

The crosslinking agent may be sulfur, halogenated sulfur, organic peroxide, quinone dioxime, an organic polyvalent amine compound, alkylphenol resin having a methylol group, or the like. Among these examples, sulfur is usually used as the crosslinking agent. The usage ratio of the crosslinking agent is preferably 0.1 to 10 parts by mass, and more preferably 0.5 to 5 parts by mass with respect to 100 parts by mass of the polymer component.

### <Acidic compound>

As the acidic compound, saturated fatty acids having 12 to 24 carbon atoms and metal salts thereof are suitably used. A specific example of the acidic compound may be lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, calcium salts or zinc salts of the above saturated fatty acids, or the like. These acidic compounds can be used alone or in combination of two or more. Among these acidic compounds, stearic acid is preferable. The usage ratio of the acidic compound is preferably 0.3 to 15 parts by mass with respect to 100 parts by mass of the polymer component.

### <Other additives>

The extender oil may be, for example, aroma oil, naphthene oil, paraffin oil, or the like. The usage ratio of the extender oil is 0 to 50 parts by mass with respect to 100 parts by mass of the polymer component.

The anti-aging agent may be, for example, N-(1,3-dimethylbutyl)-N'-phenyl-p-phenylenediamine or the like. The usage ratio of the anti-aging agent is 0.5 to 5 parts by mass with respect to 100 parts by mass of the polymer component.

The vulcanization aid may be, for example, zinc oxide or the like. The usage ratio of the vulcanization aid is 1 to 5 parts by mass with respect to 100 parts by mass of the polymer component.

The vulcanization accelerator may be a guanidine compound, an aldehyde-amine compound, an aldehyde-ammonia compound, a thiazole compound, a sulfenamide compound, a thiourea compound, a thiuram compound, a dithiocarbamate compound, a xanthate compound, or the like. A preferable specific example of the vulcanization accelerator may be a sulfenamide vulcanization accelerator such as N-cyclohexyl-2-benzothiazyl sulfenamide (CBS), N-tetra-butyl-2-benzothiazyl sulfenamide (TBBS), or the like. The usage ratio of the vulcanization accelerator is appropriately determined in consideration of the type and the usage ratio of a basic compound, and is preferably 0.5 to 5 parts by mass with respect to 100 parts by mass of the polymer component.

### 1.4. Manufacturing method of polymer composition

The polymer composition according to the embodiment can be prepared by kneading each of the above components using, for example, a kneader such as a Plastomill, a Banbury mixer, a roll, an internal mixer, or the like. For example, it is preferable to prepare the polymer composition by the following method.

### <First-stage kneading>

In the first-stage kneading, it is preferable to knead the conjugated diene-based polymer (A) together with the filler and the silane coupling agent added as needed. In addition, in the first-stage kneading, the additional polymer, the extension oil, the anti-aging agent, and the like are also kneaded together, if necessary. In addition, in the first-stage kneading, the acidic compound, which is preferably kneaded in the second-stage kneading, may be kneaded together.

By providing the filler to the first-stage kneading, the dispersibility thereof may be easily improved, and the low fuel consumption performance of the tire (the crosslinked polymer) formed from the obtained polymer composition may be improved.

In addition, when the silane coupling agent is provided to the first-stage kneading, it is preferable that first, the conjugated diene-based polymer (A), the additional polymer, and if necessary, the filler are kneaded, and then, the silane coupling agent is added (post-added) to be further kneaded.

By post-adding the silane coupling agent in the first-stage kneading, the obtained polymer composition has more excellent processability, and the crosslinked polymer formed from the polymer composition has a more excellent low hysteresis loss characteristic. In addition, when the polymer composition contains silica as a filler, the dispersibility of the silica can be improved.

When the silane coupling agent is post-added, the timing of adding the silane coupling agent depends on the type of the silica, the usage ratio of the silica, kneading conditions, and the like, and is determined as appropriate in consideration of the usage ratio of the conjugated diene-based polymer (A) and the additional polymer, and the like.

In addition, when the silane coupling agent is post-added, it is preferable that the conjugated diene-based polymer (A) and the additional polymer are blended and kneaded for 0.5 to 10 minutes, and then the silane coupling agent is added and kneaded for 0.5 to 10 minutes.

The kneader used for the first-stage kneading may be an open type or a closed type kneader such as a Plastomill, a Banbury mixer, a roll, an internal mixer, or the like. In addition, in the first-stage kneading, the kneading temperature is set to 30°C to 180°C, and preferably 50°C to 160°C.

In addition, when the silane coupling agent is provided to the first-stage kneading, the method is not limited to the method of post-adding the silane coupling agent and then kneading. A kneaded product containing the silane coupling agent may be obtained by a method of kneading the silane coupling agent together with all the other components provided to the first-stage kneading all at once. In addition, the additional polymer and an additive may be added after a masterbatch is produced, in which the conjugated diene-based polymer (A), the silica as a filler, and the silane coupling agent are kneaded.

### <Second-stage kneading>

The second-stage kneading is a process of adding at least a crosslinking agent to the kneaded product obtained in the first-stage kneading and kneading the kneaded product and the crosslinking agent to obtain a polymer composition. In the second-stage kneading, it is preferable that the acidic compound is kneaded together with the kneaded product obtained in the first-stage kneading and the crosslinking agent. In addition, in the second-stage kneading, the zinc oxide and the vulcanization accelerator are also kneaded together, if necessary. Besides, in the second-stage kneading, the polymer composition is generally obtained by a method of kneading all the components (specifically, the kneaded product obtained in the first-stage kneading, the crosslinking agent, and additional components provided as needed such as the acidic compound, the zinc oxide, the vulcanization accelerator, and the like) provided to the second-stage kneading all at once.

By providing the acidic compound to the second-stage kneading, the obtained polymer composition has more excellent processability, and the crosslinked polymer formed from the polymer composition has a more excellent low loss property.

In the second-stage kneading, the kneader used in the first-stage kneading is used. In addition, in the second-stage kneading, the kneading temperature is set to 30°C to 130°C, and preferably 50°C to 110°C.

The polymer composition obtained by the manufacturing method described above is an unvulcanized polymer composition, and forms a crosslinked polymer by being subjected to a crosslinking treatment such as vulcanization, or the like.

### 1.5. Application

The crosslinked polymer formed from the polymer composition according to the embodiment is suitably used as a tire, specifically, the tread of a tire. The tire formed from the polymer composition according to the embodiment has high strength in the tread and a desired shape of the tread, so that excellent performance can be obtained. In addition, the crosslinked polymer formed from the polymer composition according to the embodiment can also be used as a tire member other than the tread, an anti-vibration rubber, a fender, a belt, a hose, other industrial products, and the like.

### 2. Example

Hereinafter, specific examples of the present invention are described, but the present invention is not limited to these examples. Note that, "%" in the following manufacturing examples, examples, and comparative examples is mass basis unless otherwise specified.

### 2.1. Manufacturing example of conjugated diene-based polymer (A)

### <Manufacturing example 1>

In an autoclave reactor with an internal volume of 16 liters which has been subjected to nitrogen replacement, 1,3-butadiene at 25.0 g/min, styrene at 14.05 g/min, cyclohexane as a solvent at 237.1 g/min, tetrahydrofuran at 3.0 g/min, and n-butyllithium at 0.291 mmol/min (18.67 mg/min) were continuously charged, and the reactor temperature was controlled at 75°C.

The polymer solution was continuously discharged from the first reactor at 279.2 g/min and N-benzylidene-3-triethoxysilyl-1-propaneamine was added at 0.0874 mmol/min to the first reactor for line mixing, and then the mixer was continuously introduced to the second reactor to perform the reaction. At an outlet of the second reactor, 0.7 parts by mass of di-tert-butyl-p-cresol was added with respect to 100 parts by mass of the polymer component. Next, the solvent is removed by steam stripping, the remaining was dried by a heat roll adjusted to 110°C, and a modified conjugated diene-based copolymer (hereinafter, also referred to as "SBR-1") was obtained.

### <Manufacturing example 2>

The same operation as Manufacturing example 1 was carried out except that 1,16-bis(triethoxysilyl)-4,12-diyl-4,13-diazahexadecane was added at 0.0437 mmol/min instead of N-benzylidene-3-triethoxysilyl-1-propaneamine, and a modified conjugated diene-based copolymer (hereinafter, also referred to as "SBR-2") was obtained.

### <Manufacturing example 3>

The same operation as Manufacturing example 1 was carried out except that N,N,N',N'-tetrakis (3-triethoxysilylpropyl)-1,3-diaminopropane was added at 0.0328 mmol/min instead of N-benzylidene-3-triethoxysilyl-1-propaneamine, and a modified conjugated diene-based copolymer (hereinafter, also referred to as "SBR-3") was obtained.

### <Manufacturing example 4>

The same operation as Manufacturing example 1 was carried out except that N-(3-imidazolylpropyl)-N,N-bis(3-triethoxysilylpropyl) amine was added at 0.0655 mmol/min instead of N-benzylidene-3-triethoxysilyl-1-propaneamine, and a modified conjugated diene-based copolymer (hereinafter, also referred to as "SBR-4") was obtained.

### 2.2. Measurement method of physical property

### <Measurement of number average molecular weight (Mn) and weight average molecular weight (Mw)>

For each polymer manufactured above, gel permeation chromatograph (GPC) ("HLC-8120" manufactured by Tosoh Corporation) was used to calculate the number average molecular weight (Mn) and the weight average molecular weight (Mw) in terms of polystyrene from a retention time corresponding to the maximum peak of a GPC curve obtained under the following GPC conditions.
(GPC condition)
Column: 2 columns of product name "GMHXL" (manufactured by Tosoh Corporation)
Column temperature: 40°C
Mobile phase: tetrahydrofuran
Flow velocity: 1.0 ml/min
Sample concentration: 10 mg/20 ml

### <Measurement of vinyl content and bound styrene content>

- Vinyl content (%): measured by ¹H-NMR measurement at 400 MHz.
- Bound styrene content (%): measured by ¹H-NMR measurement at 400 MHz. The bound styrene content is a parameter corresponding to the aromatic vinyl content.

### 2.3. Examples 1 to 8 and Comparative examples 1 to 4

### 2.3.1. Manufacture of polymer composition and crosslinked polymer

A polymer composition was manufactured by blending each component according to the formulation shown in Table 2 below and kneading the components. The kneading was carried out by the following method.

As the first-stage kneading, a Plastomill (content: 250 ml) equipped with a temperature control device was used to knead the polymer components, silica, carbon black, silane coupling agent, extender oil, DPG, zinc oxide, and stearic acid shown in Table 2 below under the conditions of a filling rate of 72% and a rotation speed of 60 rpm. Next, as the second-stage kneading, after the kneaded product obtained above was cooled to room temperature, the sulfur, the vulcanization accelerator, and the anti-aging agent were kneaded, and thereby each polymer composition of Examples 1 to 8 and Comparative examples 1 to 4 was obtained.

Next, each of the obtained polymer compositions was molded and vulcanized at 160°C for a predetermined time with a vulcanization press to obtain each crosslinked polymer having a predetermined shape to be subjected to the following evaluation test.

### 2.3.2. Evaluation of polymer composition and crosslinked polymer

The following evaluation tests were carried out on each of the obtained polymer compositions and crosslinked polymers. The results are shown in Table 2 below.

### <Wet grip property (0°C tanδ)>

The crosslinked polymer obtained above was used as a measurement sample, and ARES-RDA (manufactured by TA Instruments) was used to measure the loss coefficient (tanδ (0°C)) under the conditions of a shear strain of 0.14%, an angular velocity of 100 radians per second, and 0°C. In Table 2 below, the measured value of Comparative Example 1 is shown as the standard by an index of 100, and the larger the numerical value, the better the wet grip property.

### <Low fuel consumption property (50°C tanδ)>

The crosslinked polymer obtained above was used as a measurement sample, and ARES-RDA (manufactured by TA Instruments) was used to measure the loss coefficient (tanδ (50°C)) under the conditions of a shear strain of 0.7%, an angular velocity of 100 radians per second, and 50°C. In Table 2 below, the measured value of Comparative Example 1 is shown as the standard by an index of 100, and the larger the numerical value, the smaller the energy loss and the better the low loss property.

### <Strain characteristic (ΔG')>

The crosslinked polymer obtained above was used as a measurement sample, and a dynamic spectrometer (manufactured by Rheometrics, USA) was used to measure under the conditions of a tensile dynamic strain of 0.1 to 10%, an angular velocity of 100 radians per second, and 50°C. In Table 2 below, the measured value of Comparative Example 1 is shown as the standard by an index of 100, and the larger the numerical value, the better the dispersibility of the filler.

### <Mooney viscosity>

For the unvulcanized polymer composition obtained above, an L rotor was used to calculate the Mooney viscosity ML_{1 + 8} under the conditions of preheating of 1 minute, a rotor operating time of 4 minutes, and a temperature of 125°C in accordance with JIS K6300-1: 2013. In Table 2 below, the measured value of Comparative Example 1 is shown as the standard by an index of 100, and the larger the numerical value, the larger the Mooney viscosity ML_{1 + 8}.

### <Ozone resistance>

In accordance with JIS K6259-1: 2015, a test piece of the crosslinked polymer obtained above (length: 60 mm × width: 10 mm × thickness: 2 mm) was attached to a stretch jig, subjected to a tensile strain of 20%, and left to stand for 48 hours at an ozone concentration of 0.5 ppm and an atmospheric temperature of 40°C. In this way, a static ozone deterioration test was conducted. The evaluation standards are as follows. The results are shown in Table 2 below.

### (Evaluation standard)

0: No cracks.
1: Cracks that can be observed when enlarged are recognized.
2: Cracks (0.5 mm or less) that can be observed with naked eyes but are very small are recognized.
3: Cracks other than 0, 1, and 2 described above are recognized.

### 2.4. Evaluation result

Table 1 below shows the physical property value of each polymer synthesized above. Table 2 below shows the composition and evaluation result of each polymer composition.

**[Table 1]**

| Type of polymer | SBR-1 | SBR-2 | SBR-3 | SBR-4 |
|---|---|---|---|---|
| Bound styrene content (%) | 36 | 37 | 35 | 35 |
| Vinyl content (%) | 43 | 42 | 43 | 44 |
| Weight average molecular weight (Mw) (10,000) | 98 | 96 | 89 | 92 |
| Number average molecular weight (Mn) (10,000) | 60 | 56 | 53 | 59 |

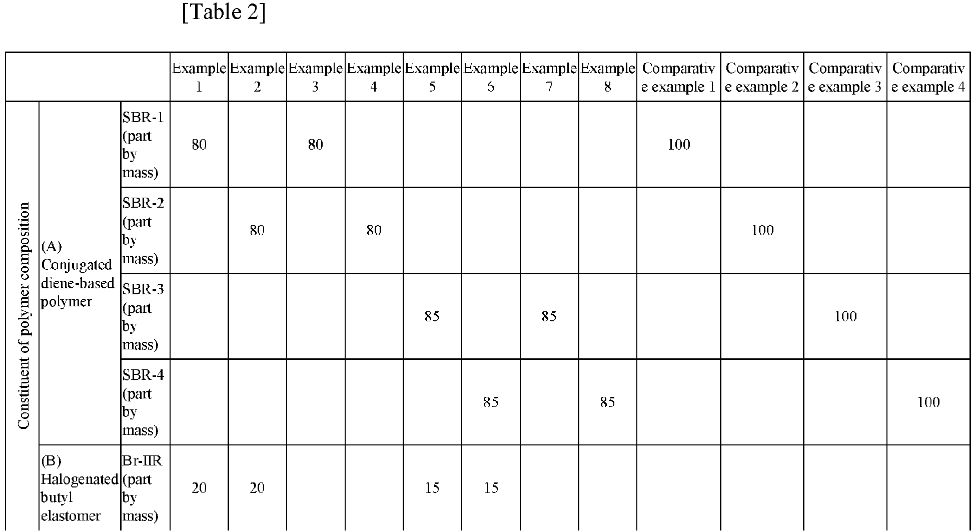

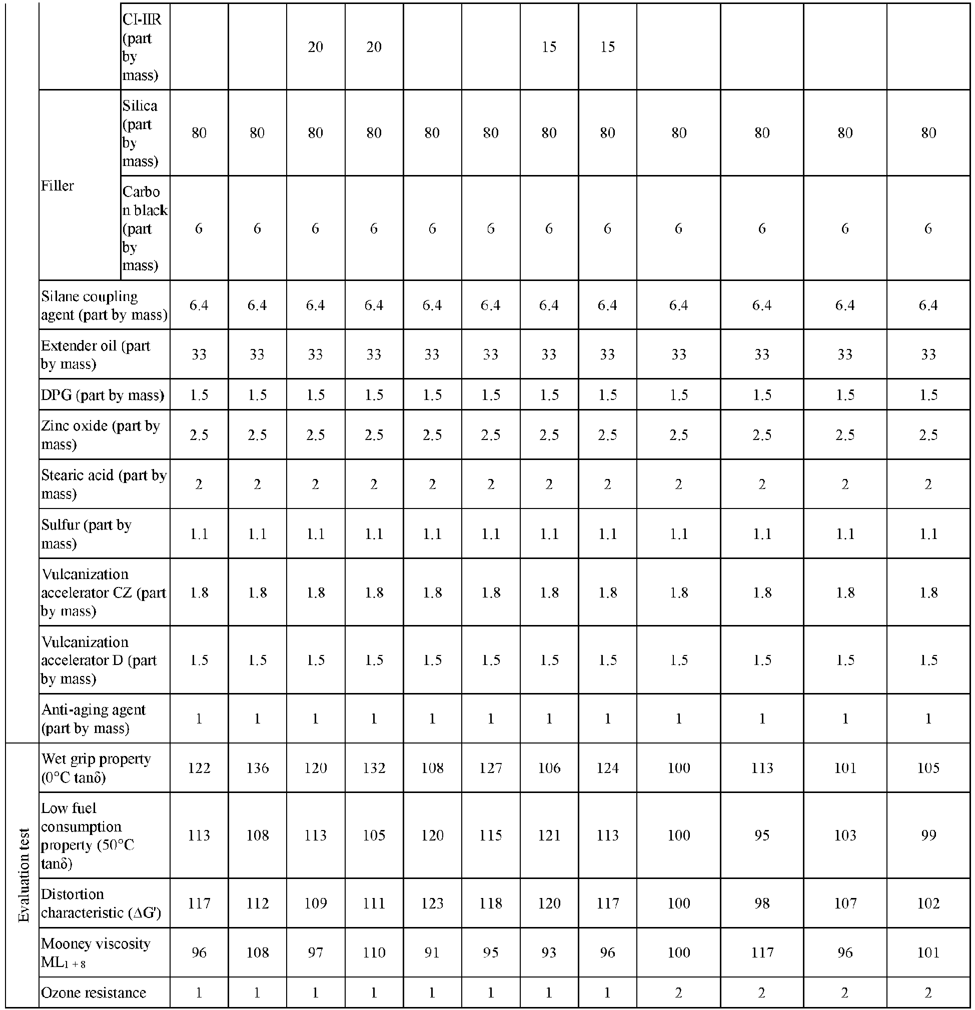

In Table 2 above, the numerical value of each component in the constituents of the polymer composition represents part by mass. Note that, the following products were respectively used as each of the materials shown in Table 2 above.
- Br-IIR: manufactured by JSR Corporation, product name "JSR BROMOBUTYL 2222", brominated isobutylene-isoprene copolymer
- CI-IIR: manufactured by JSR Corporation, product name "JSR CHLOROBUTYL 1066", chlorinated isobutylene-isoprene copolymer
- Silica: manufactured by Rhodia Japan. Ltd, product name "ZEOSIL 1165MP"
- Carbon black: manufactured by Tokai Carbon Co., Ltd., product name "Seast KH"
- Silane coupling agent: manufactured by Evonik Corporation, product name "Si75"
- Extender oil: manufactured by Nippon Oil Corporation, product name "T-DAE"
- DPG: manufactured by Ouchi Shinko Chemical Industrial Co., Ltd., product name "Nocceler D"
- Zinc oxide: manufactured by Hakusui Tech Corporation, product name "Zinc Oxide Type II"
- Stearic acid: manufactured by NOF Corporation, product name "Beads Stearic Acid Camellia"
- Sulfur: manufactured by Tsurumi Chemical Industry Co., Ltd., product name "'Golden flower' oil treated sulfur powder"
- Vulcanization accelerator CZ: manufactured by Sumitomo Chemical Co., Ltd., product name "Soxinol CZ", N-cyclohexyl-2-benzothiazolesulfenamide
- Vulcanization accelerator D: manufactured by Sumitomo Chemical Co., Ltd., product name "Soxinol D", 1,3-diphenylguanidine
- Anti-aging agent: manufactured by Seiko Chemical Co., Ltd., product name "Ozonone 6C", N-(1,3-dimethylbutyl)-N'-phenyl-p-phenylenediamine

From the results in Table 2 above, it can be confirmed that in the polymer compositions according to Examples 1 to 8, as compared with the polymer composition according to Comparative Example 1, the dispersibility of the filler was improved, thereby obtaining a crosslinked polymer having not only excellent processability but also a highly excellent balance among the low loss property, the wet grip property, and the ozone resistance.

The present invention is not limited to the above embodiments, and various modifications are possible. The present invention includes substantially the same configurations as those described in the embodiments (for example, configurations with the same function, method and result, or configurations with the same purpose and effect). In addition, the present invention includes a configuration in which a non-essential part of the configuration described in the above embodiment is replaced with another configuration. Furthermore, the present invention also includes a configuration that exhibits the same effect or a configuration that can achieve the same object as the configuration described in the above embodiment. Furthermore, the present invention also includes a configuration in which a known technique is added to the configuration described in the above embodiment.

## Claims

1. A polymer composition, comprising:
(A) a conjugated diene-based polymer which is either a polymer of a conjugated diene compound or a copolymer of a conjugated diene compound and an aromatic vinyl compound, and which is a reaction product between an active polymerization terminal and a compound represented by any of the following general formulas (1) to (4); and
(B) a halogenated butyl elastomer, 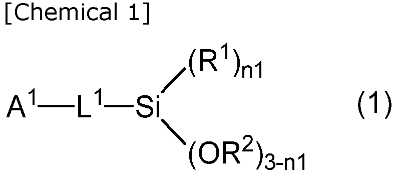 (In formula (1), A¹ is an amide group, a monovalent group bonded to L¹ by a sulfide or a polysulfide, or represents a nitrile group, a pyridyl group, a (thio)formyl group, a (thio)carboxylic acid ester, a metal salt of a (thio)carboxylic acid ester, or a carboxylic acid halide; L¹ represents a hydrocarbylene group having 1 to 20 carbon atoms; R¹ and R² independently represent a hydrocarbyl group having 1 to 4 carbon atoms, respectively; and n1 is 0 or 1) 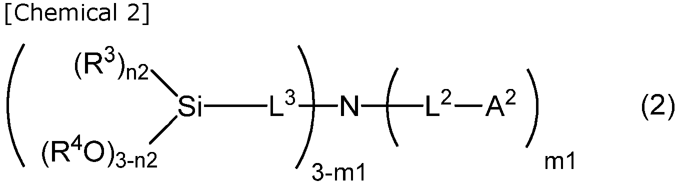 (In formula (2), A² is an imino group, an amide group, a (thio)carbonyl group, a (thio)carbonyloxy group, a monovalent group bonded to L² by a sulfide or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic acid halide, an imidazolyl group, or a group represented by the following formula (2a); L² and L³ independently represent a single bond or a hydrocarbylene group having 1 to 20 carbon atoms, respectively; R³ and R⁴ independently represents a hydrocarbyl group having 1 to 4 carbon atoms, respectively; n2 is 0 to 2; and m1 is 0 or 1) 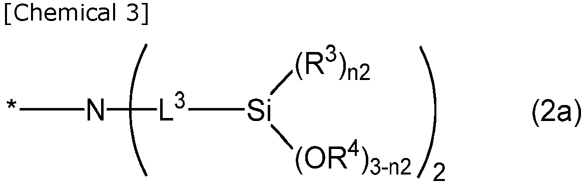 (In formula (2a), L³, R³, R⁴ and n2 are the same as in formula (2), and the sign "*" indicates a portion that bonds to L²) 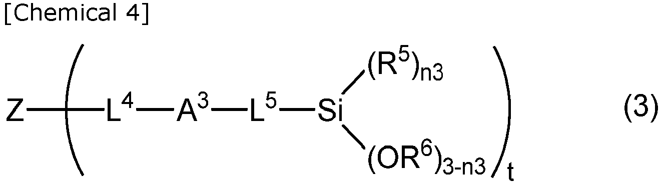 (In formula (3), A³ independently represents an imino group, an amide group, a (thio)carbonyl group, a (thio)carbonyloxy group, a secondary amino group, or a tertiary amino group, respectively; Z represents a t-valent group having 1 to 20 carbon atoms containing or not containing a nitrogen atom; L⁴ represents a single bond or a hydrocarbylene group having 1 to 20 carbon atoms; L⁵ represents a hydrocarbylene group having 1 to 20 carbon atoms; R⁵ and R⁶ independently represent a hydrocarbyl group having 1 to 4 carbon atoms, respectively; n3 is 0 or 1; and t is 2 or 3) 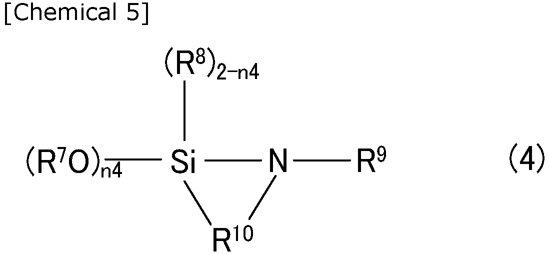 (In formula (4), R⁷ and R⁸ independently represent a hydrocarbyl group having 1 to 20 carbon atoms, respectively; R⁹ is a hydrocarbyl group having 1 to 20 carbon atoms, or a substituted alkyl group having 1 to 20 carbon atoms in which at least one of a hydrogen atom and -CH₂- contained in an alkyl group is substituted with a group containing at least one element selected from the group consisting of silicon, nitrogen, phosphorus, oxygen and sulfur, or represents an aromatic group having 6 to 20 carbon atoms containing at least one element selected from the group consisting of nitrogen, phosphorus, oxygen and sulfur; R¹⁰ represents an alkanediyl group having 1 to 20 carbon atoms; and n4 is 1 or 2).

2. The polymer composition according to claim 1, wherein the halogenated butyl elastomer (B) is contained in an amount of 1 part by mass or more and 50 parts by mass or less with respect to 100 parts by mass of the polymer component contained in the polymer composition.

3. The polymer composition according to claim 1 or 2, wherein the weight average molecular weight of the conjugated diene-based polymer (A) in terms of polystyrene as measured by gel permeation chromatography is 10,000 to 2,000,000.

4. The polymer composition according to any one of claims 1 to 3, wherein the halogenated butyl elastomer (B) is at least one selected from the group consisting of a halogenated isobutylene-isoprene copolymer and a halogenated isobutylene-p-methylstyrene copolymer.

5. The polymer composition according to any one of claims 1 to 4, wherein the Mooney viscosity ML_{1 + 8} of the halogenated butyl elastomer (B) at 125°C, which is measured in accordance with JIS K-6300-1: 2001, is 20 to 60.

6. The polymer composition according to any one of claims 1 to 5, further comprising a crosslinking agent.

7. A crosslinked polymer, which is manufactured using the polymer composition according to claim 6.

8. A tire, in which the crosslinked polymer according to claim 7 is used.

## Patentansprüche

1. Polymerzusammensetzung, umfassend:
(A) ein Polymer auf Basis eines konjugierten Diens, das entweder ein Polymer aus einer konjugierten Dienverbindung oder ein Copolymer aus einer konjugierten Dienverbindung und einer aromatischen Vinylverbindung ist und das ein Reaktionsprodukt zwischen einem aktiven Polymerisationsende und einer Verbindung ist, die durch eine der folgenden allgemeinen Formeln (1) bis (4) dargestellt ist; und
(B) ein halogeniertes Butylelastomer, 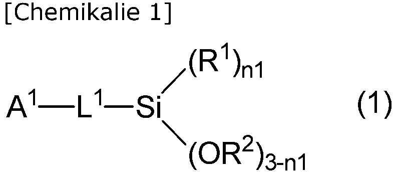 (In Formel (1) ist A¹ eine Amidgruppe, eine monovalente Gruppe, die an L¹ durch ein Sulfid oder ein Polysulfid gebunden ist, oder stellt eine Nitrilgruppe, eine Pyridylgruppe, eine (Thio)formylgruppe, einen (Thio)carbonsäureester, ein Metallsalz eines (Thio)carbonsäureesters oder ein Carbonsäurehalogenid dar; L¹ stellt eine Hydrocarbylengruppe mit 1 bis 20 Kohlenstoffatomen dar; R¹ und R² stellen jeweils unabhängig voneinander eine Hydrocarbylgruppe mit 1 bis 4 Kohlenstoffatomen dar; und n1 ist 0 oder 1) 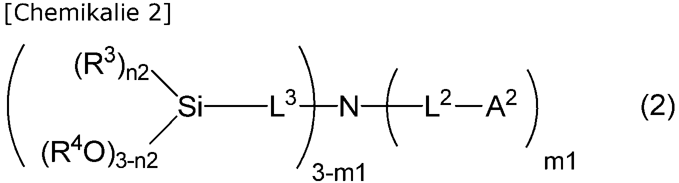 (In Formel (2) ist A² eine Iminogruppe, eine Amidgruppe, eine (Thio)carbonylgruppe, eine (Thio)carbonyloxygruppe, eine monovalente Gruppe, die an L² durch ein Sulfid oder ein Polysulfid gebunden ist, oder stellt eine geschützte primäre Aminogruppe, eine geschützte sekundäre Aminogruppe, eine tertiäre Aminogruppe, eine Nitrilgruppe, eine Pyridylgruppe, eine (Thio)epoxygruppe, eine (Thio)isocyanatgruppe, eine (Thio)formylgruppe, einen (Thio)carbonsäureester, ein Metallsalz eines (Thio)carbonsäureesters, ein Carbonsäurehalogenid, eine Imidazolylgruppe, oder eine durch die folgende Formel (2a) dargestellte Gruppe dar; L² und L³ stellen unabhängig voneinander jeweils eine Einfachbindung oder eine Hydrocarbylengruppe mit 1 bis 20 Kohlenstoffatomen dar; R³ und R⁴ stellen unabhängig voneinander jeweils eine Hydrocarbylgruppe mit 1 bis 4 Kohlenstoffatomen dar; n2 ist 0 bis 2; und m1 ist 0 oder 1) 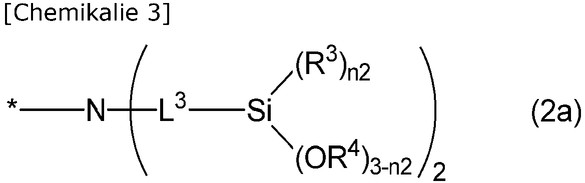 (In Formel (2a) sind L³, R³, R⁴ und n2 gleich wie in Formel (2), und das Zeichen "*" bezeichnet einen Teil, der an L² bindet) 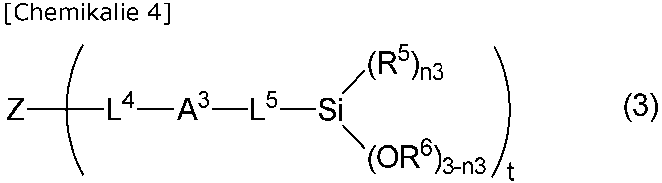 (In Formel (3) stellt A³ unabhängig eine Iminogruppe, eine Amidgruppe, eine (Thio)carbonylgruppe, eine (Thio)carbonyloxygruppe, eine sekundäre Aminogruppe bzw. eine tertiäre Aminogruppe dar; Z stellt eine t-wertige Gruppe mit 1 bis 20 Kohlenstoffatomen dar, die ein Stickstoffatom enthält oder nicht enthält; L⁴ stellt eine Einfachbindung oder eine Hydrocarbylengruppe mit 1 bis 20 Kohlenstoffatomen dar; L⁵ stellt eine Hydrocarbylengruppe mit 1 bis 20 Kohlenstoffatomen dar; R⁵ und R⁶ stellen unabhängig voneinander eine Hydrocarbylgruppe mit 1 bis 4 Kohlenstoffatomen dar; n3 ist 0 oder 1; und t ist 2 oder 3) 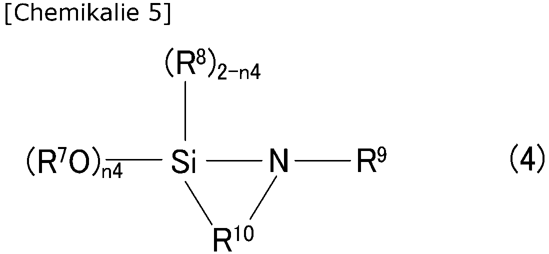 (In Formel (4) stellen R⁷ und R⁸ unabhängig voneinander jeweils eine Hydrocarbylgruppe mit 1 bis 20 Kohlenstoffatomen dar; R⁹ ist eine Hydrocarbylgruppe mit 1 bis 20 Kohlenstoffatomen oder eine substituierte Alkylgruppe mit 1 bis 20 Kohlenstoffatomen, in der mindestens eines von einem Wasserstoffatom und -CH₂-, die in einer Alkylgruppe enthalten sind, mit einer Gruppe substituiert ist, die mindestens ein Element enthält, das aus der Gruppe ausgewählt ist, die aus Silicium, Stickstoff, Phosphor, Sauerstoff und Schwefel besteht, oder stellt eine aromatische Gruppe mit 6 bis 20 Kohlenstoffatomen dar, die mindestens ein Element enthält, das aus der Gruppe ausgewählt ist, die aus Stickstoff, Phosphor, Sauerstoff und Schwefel besteht; R¹⁰ stellt eine Alkandiylgruppe mit 1 bis 20 Kohlenstoffatomen dar; und n4 ist 1 oder 2).

2. Polymerzusammensetzung nach Anspruch 1, wobei das halogenierte Butylelastomer (B) in einer Menge von 1 Masseteil oder mehr und 50 Masseteilen oder weniger, bezogen auf 100 Masseteile der in der Polymerzusammensetzung enthaltenen Polymerkomponente, enthalten ist.

3. Polymerzusammensetzung nach Anspruch 1 oder 2, wobei das gewichtsmittlere Molekulargewicht des Polymers (A) auf Basis eins konjugierten Diens, bezogen auf Polystyrol, gemessen durch Gelpermeationschromatographie, 10.000 bis 2.000.000 ist.

4. Polymerzusammensetzung nach einem der Ansprüche 1 bis 3, wobei das halogenierte Butylelastomer (B) mindestens eines ist, das aus der Gruppe bestehend aus einem halogenierten Isobutylen-Isopren-Copolymer und einem halogenierten Isobutylen-p-Methylstyrol-Copolymer ausgewählt ist.

5. Polymerzusammensetzung nach einem der Ansprüche 1 bis 4, wobei die Mooney-Viskosität ML_{1 + 8} des halogenierten Butylelastomers (B) bei 125°C, gemessen in Übereinstimmung mit JIS K-6300-1: 2001, 20 bis 60 ist.

6. Polymerzusammensetzung nach einem der Ansprüche 1 bis 5, ferner umfassend ein Vernetzungsmittel.

7. Vernetztes Polymer, das unter Verwendung der Polymerzusammensetzung nach Anspruch 6 hergestellt ist.

8. Reifen, in dem das vernetzte Polymer nach Anspruch 7 verwendet wird.

## Revendications

1. Composition de polymère, comprenant :
(A) un polymère à base de diène conjugué qui est soit un polymère d'un composé de diène conjugué, soit un copolymère d'un composé de diène conjugué et d'un composé vinylique aromatique, et qui est un produit de réaction entre un terminal de polymérisation actif et un composé représenté par l'une des formules générales suivantes (1) à (4) ; et
(B) un élastomère butyle halogéné, 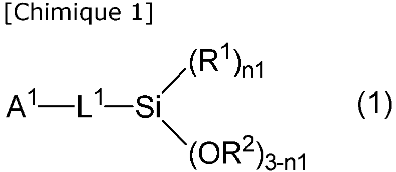 (Dans la formule (1), A¹ est un groupe amide, un groupe monovalent lié à L¹ par un sulfure ou un polysulfure, ou représente un groupe nitrile, un groupe pyridyle, un groupe (thio)formyle, un ester d'acide (thio)carboxylique, un sel métallique d'un ester d'acide (thio)carboxylique, ou un halogénure d'acide carboxylique ; L¹ représente un groupe hydrocarbylène ayant de 1 à 20 atomes de carbone ; R¹ et R² représentent indépendamment un groupe hydrocarbyle ayant de 1 à 4 atomes de carbone, respectivement ; et n1 est 0 ou 1) 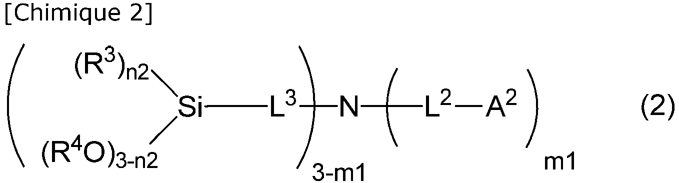 (Dans la formule (2), A² est un groupe imino, un groupe amide, un groupe (thio)carbonyle, un groupe (thio)carbonyloxy, un groupe monovalent lié à L² par un sulfure ou un polysulfure, ou représente un groupe amino primaire protégé, un groupe amino secondaire protégé, un groupe amino tertiaire, un groupe nitrile, un groupe pyridyle, un groupe (thio)époxy, un groupe (thio)isocyanate, un groupe (thio)formyle, un ester d'acide (thio)carboxylique, un sel métallique d'un ester d'acide (thio)carboxylique, un halogénure d'acide carboxylique, un groupe imidazolyle, ou un groupe représenté par la formule (2a) suivante ; L² et L³ représentent indépendamment une liaison simple ou un groupe hydrocarbylène ayant de 1 à 20 atomes de carbone, respectivement ; R³ et R⁴ représentent indépendamment un groupe hydrocarbyle ayant de 1 à 4 atomes de carbone ; n2 est de 0 à 2 ; et m1 est 0 ou 1 ; 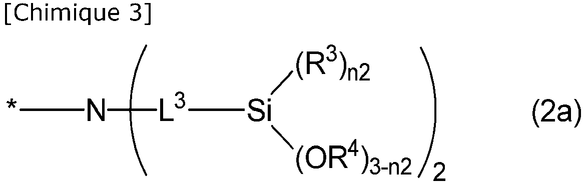 (Dans la formule (2a), L³, R³, R⁴ et n2 sont les mêmes que dans la formule (2), et le signe "*" indique une partie qui se lie à L²) 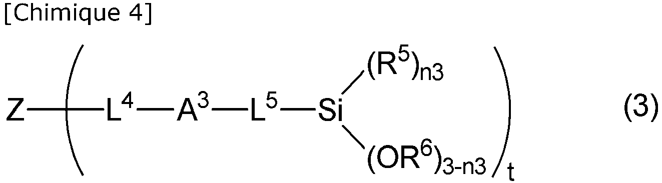 (Dans la formule (3), A³ représente indépendamment un groupe imino, un groupe amide, un groupe (thio)carbonyl, un groupe (thio)carbonyloxy, un groupe amino secondaire, ou un groupe amino tertiaire, respectivement ; Z représente un groupe t-valent ayant de 1 à 20 atomes de carbone contenant ou non un atome d'azote ; L⁴ représente une liaison simple ou un groupe hydrocarbylène ayant de 1 à 20 atomes de carbone ; L⁵ représente un groupe hydrocarbylène ayant de 1 à 20 atomes de carbone ; R⁵ et R⁶ représentent indépendamment un groupe hydrocarbyle ayant de 1 à 4 atomes de carbone, respectivement ; n3 est 0 ou 1 ; et t est 2 ou 3) 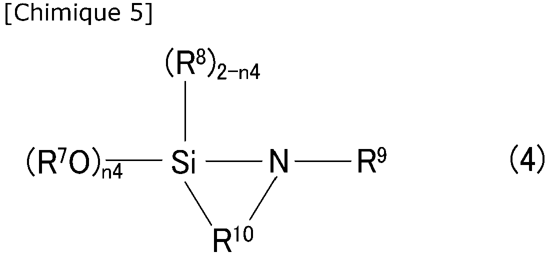 (Dans la formule (4), R⁷ et R⁸ représentent indépendamment un groupe hydrocarbyle ayant de 1 à 20 atomes de carbone, respectivement ; R⁹ est un groupe hydrocarbyle ayant 1 à 20 atomes de carbone, ou un groupe alkyle substitué ayant de 1 à 20 atomes de carbone dans lequel au moins un d'un atome d'hydrogène et de -CH₂- contenu dans un groupe alkyle est substitué par un groupe contenant au moins un élément choisi dans le groupe constitué par le silicium, l'azote, le phosphore, l'oxygène et le soufre, ou représente un groupe aromatique ayant de 6 à 20 atomes de carbone contenant au moins un élément choisi dans le groupe constitué par l'azote, le phosphore, l'oxygène et le soufre ; R¹⁰ représente un groupe alcanediyle ayant de 1 à 20 atomes de carbone ; et n4 est 1 ou 2).

2. Composition de polymère selon la revendication 1, dans laquelle l'élastomère butyle halogéné (B) est contenu en une quantité de 1 partie en masse ou plus et de 50 parties en masse ou moins par rapport à 100 parties en masse du composant polymère contenu dans la composition de polymère.

3. Composition de polymère selon la revendication 1 ou 2, dans laquelle le poids moléculaire moyen en poids du polymère à base de diène conjugué (A) en termes de polystyrène, mesurée par chromatographie par perméation de gel, est de 10 000 à 2 000 000.

4. Composition de polymère selon l'une quelconque des revendications 1 à 3, dans laquelle l'élastomère butyle halogéné (B) est au moins un choisi dans le groupe constitué par un copolymère isobutylène-isoprène halogéné et un copolymère isobutylène-p-méthylstyrène halogéné.

5. Composition de polymère selon l'une quelconque des revendications 1 à 4, dans laquelle la viscosité mooney ML_{1 + 8} de l'élastomère butyle halogéné (B) à 125°C, qui est mesurée conformément à la norme JIS K-6300-1: 2001, est de 20 à 60.

6. Composition de polymère selon l'une quelconque des revendications 1 à 5, comprenant en outre un agent de réticulation.

7. Polymère réticulé qui est fabriqué en utilisant la composition de polymère selon la revendication 6.

8. Pneu, dans lequel le polymère réticulé selon la revendication 7 est utilisé.
